# EUROPEAN PATENT APPLICATION

(11) **EP 2 441 544 A1**
(43) Date of publication of application: **18.04.2012**
(21) Application number: 11185314.9
(22) Date of filing: 14.10.2011
(51) Int. Cl.: B23B 51/02

(54) **Tip for drilling tool.**

(30) Priority: 15.10.2010 IT TO20100839
(71) Applicant: Utensileria Navone S.n.c. di Navone Giovanni & C., 10080 Baldissero Canavese (TO) (IT)
(72) Inventor: NAVONE, Giovanni, 10080 BALDISSERO CANAVESE (TO) (IT)
(74) Representative: Robba, Pierpaolo

(57) **Abstract**

The drilling tool tip (1;101;201;301) has a first pair of cutting edges (105';205';205") with a first tip angle (φ1) and a second pair of cutting edges (105";205";305") with a second tip angle (φ2), wherein said second tip angle (φ2) is less than said first tip angle (φ1) by about 2°. Due to the presence of two different tip angles, it is possible to obtain improved advancing speed and strength, as well as reduced energy consumptions.

## Description

### Field of the Art

The present invention regards a tip for a drilling tool.

In particular, the present invention regards a tip for a drilling tool that allows obtaining optimal performances in applications with a wide range of materials.

### Prior art

Drills and other boring devices are known and widespread, both in the home and in industrial settings.

Generally, said tools comprise a tip made of a material with high hardness and mechanical strength (e.g. steel) that is rotated at high speed and which removes the material with which it comes into contact in order to obtain the desired hole.

Said tip can be straight or helical.

Helical tips, which are the most widespread tips, substantially have the shape of a truncated cylinder at one end (cutting part), terminating at the other end with a cylindrical or conical shank for the coupling to the mandrel of the drilling tool. In the zone comprised between the two ends, two helical slots are made, also called grooves, which serve for clearing out the removed material and for the possible supply of refrigerant fluid.

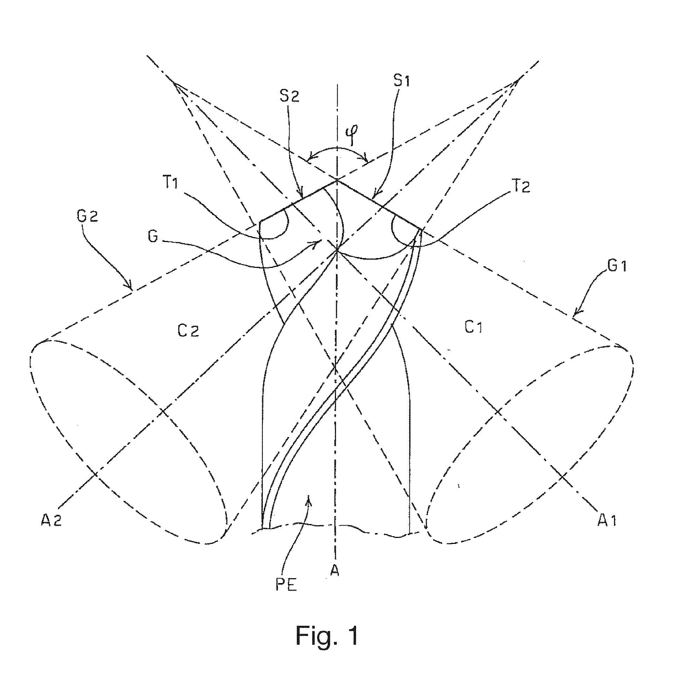

With reference to Figure 1, according to the prior art, the end of a helical tip PE is truncated with two surfaces S1,S2 belonging to two equivalent cones C1,C2 whose two axes A1,A2 meet at a point belonging to the axis A of the tip. The intersection of the conical cut surfaces S1,S2 with the surfaces of the grooves G made on the cylindrical body of the helical tip PE give rise to the two cutting edges T1,T2. The edge of the end of the helical tip PE can then be further truncated, giving rise to a segment, commonly called core trace.

The angle ϕ formed by the generatrices G1,G2 of the cones C1,C2 is called the tip angle. It generally varies from a minimum of 80° to a maximum of 140°. The selection of the tip angle ϕ considerably affects the performances of the helical tip PE, such that, generally, the value of the tip angle is selected as a function of the material to be drilled.

In addition to the tip angle ϕ, geometric characteristics that affect the performances of the helical tip PE are the lower rake angle, the upper rake angle and the cutting angle. Said angles are in any case a function of the tip angle mong other things).

In particular, the tip angle identifies the resistant section of the tool.

One drawback of helical tips, and more generally of drilling tool tips, is constituted by the fact that given the same tip angle, the cutting angle usually decreases from the center towards the periphery of the tip. Therefore, having considered that the cutting speed increases from the center to the periphery, the cutting angle is smaller in the region where the cutting actions are strongest.

This sets important limitations to the cutting speed of the tip, as well as the duration thereof, since precisely in the region where the cutting actions are strongest, the tip will wear more quickly.

In addition, the known tips for drilling tools have shown poor versatility in being applied to different materials; this constitutes a considerable limitation, considering the continuous placement of new, innovative materials on the market.

Drilling tool tips are known that are equipped with a cutting edge comprising a single edge which has two different tip angles: a first tip angle from the center of the tip up to an intermediate radius of the tip itself and a second tip angle from said intermediate radius up to the periphery of said tip; generally, said second tip angle is less than said first tip angle by about 20 - 30°.

Tips for tools of this type are known, for example, from documents EP 2,286,945, DE 299 19 858, DE 10 2006 018322, DE 203 07 258, US 2006/029477, EP 2,018,918 and JP 2001-328016.

Nevertheless, said tips for drilling tools are not capable of solving the abovementioned problems, for the single fact that they have two different tip angles; in particular, they do not have increased resistance and strength.

In addition, the drilling tool tips of the above-described type have a further drawback, linked to the size of the difference between the first and the second tip angle.

The considerable difference between said two tip angles is reflected on the profile of the obtained holes, such that the tips can only be employed for specific applications, whereas they are not suitable for being employed in standard applications.

Object of the present invention is to overcome the drawbacks of the prior art and provide a drilling tool tip that allows high performances in terms of strength and drilling speed and which can be used for applications with a wide range of different materials.

### Description of the Invention

According to the invention, the drilling tool tip has two different edges or cutting edge pairs, and in particular a first edge which has a first tip angle from the center of the tip up to an intermediate radius of the tip itself and a second edge which has a second tip angle from said intermediate radius up to the periphery of said tip. Preferably, said second tip angle is less than said first tip angle.

More preferably, said second tip angle is less than said first tip angle by about 2°.

Due to this expedient, the central portion of the tip, i.e. the first edge which has the first tip angle, starts the drilling, while the peripheral part of the tip, i.e. the second edge which has said second tip angle, continues and enlarges the hole.

Due to the presence of two edges with two different tip angles, given the same material to be drilled with the tip according to the invention, it is possible to obtain considerably higher advancing speeds than those obtainable with the known tips.

Moreover, the tip according to the invention can also be used for drilling particularly strong materials, which the known tips would not be able to drill.

In addition, due to the reduced difference between the first and the second tip angle, the profile of the obtained hole does not have particular peculiarities or irregularities, such that the versatility of application of the drilling tool tip according to the invention is not affected thereby. Practical tests have moreover shown that the tip according to the invention advantageously allows reducing the absorption of energy of the machine on which the drilling tool is mounted.

According to the invention, the drilling tool tip comprises a first edge and a second edge, said first edge being tilted by said first tip angle and said second edge being tilted by said second tip angle.

In this manner, one edge is dedicated to the operation of starting the hole, while the other edge is dedicated to the operation of continuing and enlarging the hole.

Consequently, the characteristics (relative both to the geometry and to the materials) of each edge can be selected in an optimized manner as a function of the operation requested of them.

### Summary Description of the Figures

Further characteristics and advantages of the invention will be clearer from the following description of several preferred embodiments of the invention, given as a nonlimiting example with reference to the enclosed drawings, in which:
- Figure 1 illustrates a helical tip for a drilling tool of known type;
- Figure 2 illustrates a helical tip embodiment for a drilling tool;
- Figure 3 is a top view of the tip of Figure 2;
- Figure 4a is a top view of a helical tip for a drilling tool according to a first embodiment of the invention;
- Figure 4b is a side view of the tip of Figure 4a;
- Figure 4c is a front view of Figure 4a;
- Figure 5 is a top view of a helical tip for a drilling tool according to a second embodiment of the invention;
- Figure 6 is a top view of a helical tip for a drilling tool according to a third embodiment of the invention;
- Figures 7a and 7b schematically show an application example, respectively of the helical tip of known type of Figure 1 and of the helical tip of Figure 2.

### Description of Preferred Embodiments

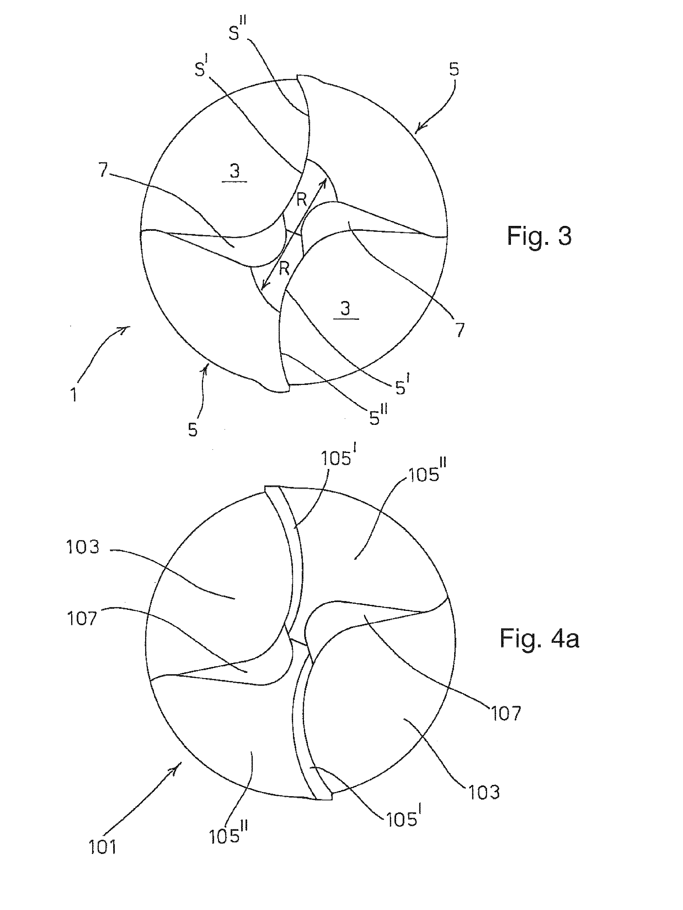

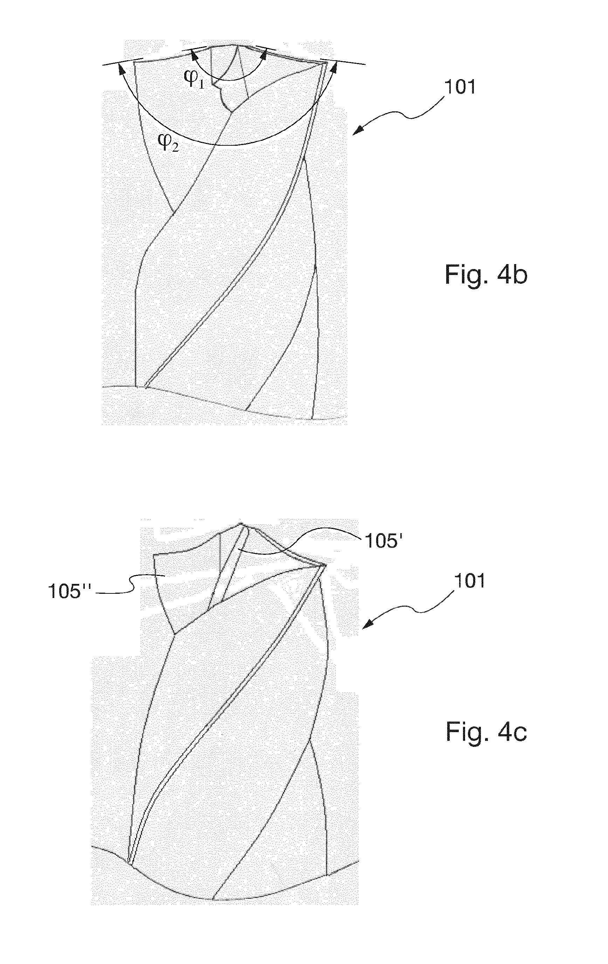

In Figures 4 - 6, the invention is illustrated as an example with reference to preferred embodiments relative to helical tips for a drilling tool; nevertheless, it will be clear to the man skilled in the art that the invention can be equally incorporated into a straight tip for a drilling tool.

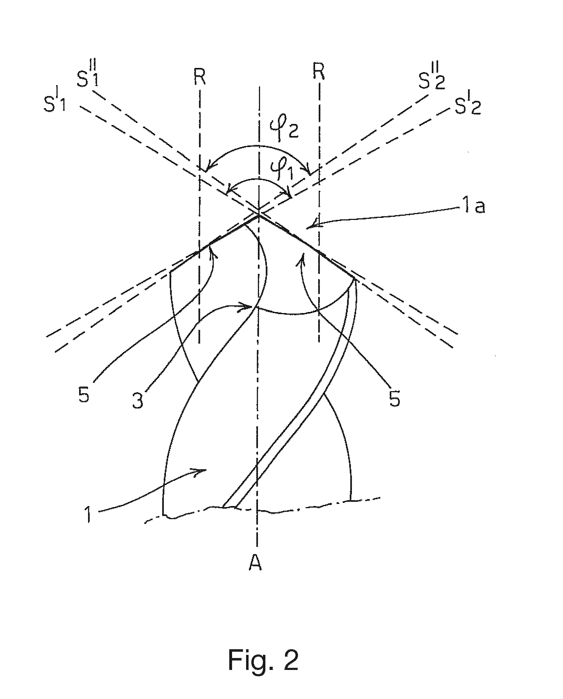

With reference to Figures 2 and 3, a helical tip 1 is illustrated for a drilling tool.

Said tip 1, according to the prior art, substantially has the form of a truncated cylinder at one end 1a, terminating at the other end (not illustrated) with a shank for coupling to the mandrel of the drilling tool. In the zone comprised between the two ends, two helical grooves 3 are obtained.

The tip 1 has two different tip angles ϕ1, ϕ2; in particular, it has a first tip angle ϕ1 between the central axis A and an intermediate radius R of the tip and a second tip angle ϕ2 different from ϕ1 between said intermediate radius R and the periphery of the tip itself.

For such purpose, the end of the helical tip 1 is truncated with two surfaces S'1,S'2 belonging to two equivalent cones whose axes meet at a point belonging to the axis A of the tip and whose generatrices form an angle ϕ1 between them. The intersection of the conical cut surfaces S'1,S'2 with the surfaces of the grooves 3 gives rise to the two cutting edges 5.

The end of the helical tip 1 is then further truncated with two surfaces S"1,S"2 belonging to two equivalent cones whose axes meet at a point belonging to the axis A of the tip and whose generatrices form an angle ϕ2 together that is different from ϕ1.

The cutting edges 5 thus obtained will have a first portion 5' between the central axis A and the intermediate radius R with a tilt of a first tip angle ϕ1 and a second portion 5'' between said intermediate radius R and the external periphery of the tip with a tilt of a second tip angle ϕ2.

In particular, in order to improve the performances of the tip 1 in terms of drilling speed, mechanical strength and wear resistance, the second tip angle ϕ2 will be less than the first tip angle ϕ1.

In particular, the second tip angle ϕ2 will preferably be about 2° less than the first tip angle ϕ1.

The first portion 5' of the cutting edges 5 (with tip angle (ϕ1) starts the drilling, while the second portion 5" of said cutting edges (with tip angle ϕ2) continues to enlarge the hole.

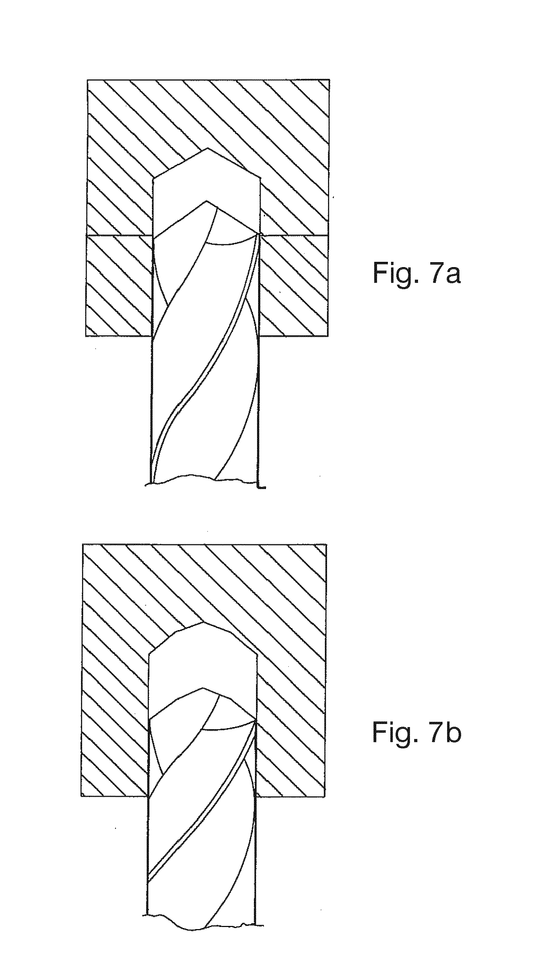

For such purpose, in Figures 7a,7b the performances are schematically compared of a helical tip obtained according to the prior art, of tip PE type illustrated in Figure 1, and a helical tip according to the invention, of tip 1 type illustrated in Figure 2; from the comparison between said figures, it is clear that, with respect to a tip of known type that advances with only one tip angle, the tip according to the invention allows initiating the drilling with the central cutting portion with greater tip angle, and continuing the enlargement of the hole itself with the peripheral cutting portion with lower tip angle.

Due to such expedient and to a shrewd selection of the tip angles ϕ1 and ϕ2, it is possible to considerably increase the performances of the tip 1, both in terms of drilling speed and in terms of strength.

In addition, due to the fact that the difference between the second tip angle ϕ2 and the first tip angle ϕ1 is about 2°, the profile of the obtained hole does not have peculiarities or irregularities, as is clear in Figure 7b.

Still with reference to Figure 3, discharge slots 7 are also illustrated, suitably obtained adjacent to the cutting edges 5.

Examining now Figures 4a - 4c, a first embodiment of the invention is illustrated herein.

In this embodiment, the helical tip 101 for a drilling tool comprises a first pair of cutting edges or edge 105' with a tilt of a first tip angle ϕ1 and a second pair of cutting edges or edge 105" with a tilt of a second tip angle ϕ2.

For the above-described grounds, the second tip angle ϕ2 will preferably be less than the first tip angle ϕ1.

In particular, the second tip angle ϕ2 will preferably be about 2° less than the first tip angle ϕ1.

As an example, the first tip angle ϕ1 can be selected equal to 140° and the second tip angle ϕ2 equal to about 138°.

In addition, the first edge will be characterized by a first rake angle, while the second edge will be characterized by a second, different rake angle. The first and the second rake angles can advantageously be selected on the basis of the material to be worked with the tip according to the invention.

Said second rake angle will preferably be less than said first rake angle.

As an example, the first rake angle can be selected equal to 10° - 12° and the second rake angle equal to about 8°.

In the embodiment illustrated in Figures 4a - 4c, the first edge 105', tilted a first tip angle, does not reach the center of the tip 101 (i.e. up to the core trace), but it stops before; the second edge 105", tilted a second, different tip angle, arrives up to the center of the tip.

In this case, the first edge 105' is defined as the "radial edge", due to the fact that it does not reach the center of the tip 101.

In this embodiment, the second edge 105" starts the drilling, while the first edge 105' continues it. Advantageously, the geometry (and in particular the tip angles) and possibly the materials of the first and second edge can be selected each time in the most suitable manner as a function of user requirements.

Also visible in Figure 4 are the discharge slots 107, adjacent to the edge 105" and the helical grooves 103.

For such purpose, it will be clear to the man skilled in the art that the presence of two different edges with different tip angles can give rise to a very high number of possible combinations, all of which fall within the scope of the present invention.

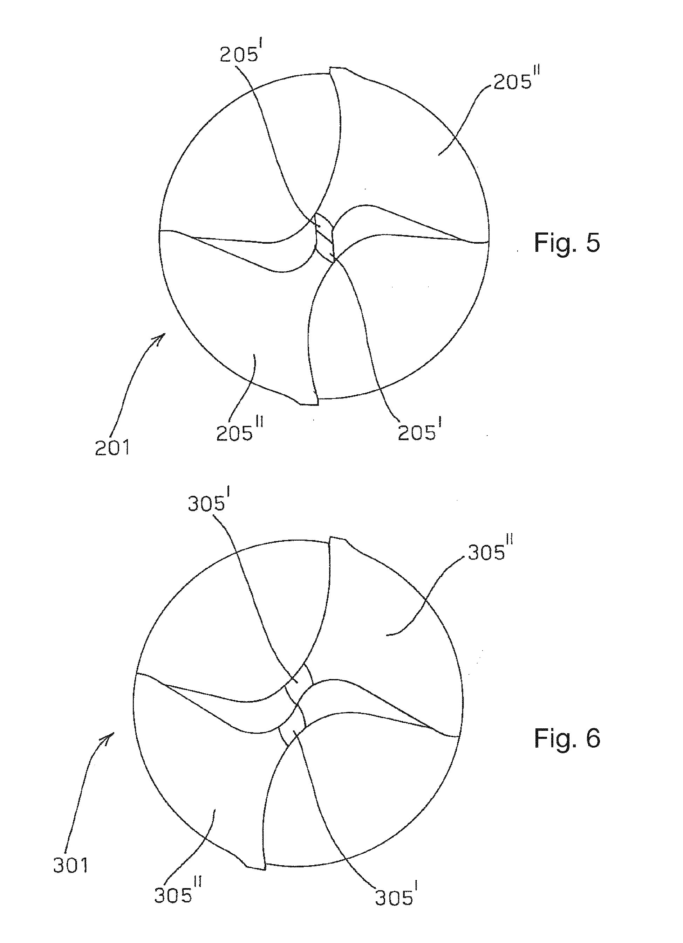

As an example, a second embodiment of the invention is illustrated in Figure 5.

According to this embodiment, the tip 201 comprises a first edge 205' tilted a first tip angle in the central portion of the tip itself, around its axis, and a second edge 205'' tilted a second tip angle in the peripheral portion of said tip.

It is clear that the tip 201 of Figure 5 will be optimally adapted for applications different from those of the tip 101 of Figure 4.

A further embodiment of the invention is illustrated in Figure 6.

Also in this case, the tip 301 comprises a first edge 305' tilted a first tip angle in the central portion of the tip itself and a second edge 305" tilted a second tip angle in the peripheral portion of said tip; said edges 305',305'' nevertheless show a different geometry with respect to the edges 205',205" of the previously illustrated embodiment and will be correspondingly adapted for different applications. From that described above, it is clear that the invention has great versatility and that the embodiments described and illustrated herein must not at all be interpreted in a limiting sense; rather, numerous modifications and variations can be introduced, still remaining within the protective scope of the present invention as defined by the set of claims.

In particular, as mentioned above, the invention can be incorporated in a drilling tool with helical tip, as well as in a drilling tool with straight tip.

It is also clear that the tool tip according to the invention can have more than two edges, each with a tip angle different from the others, from the center towards the periphery of the cutting edges of said tip.

## Claims

1. Drilling tool tip (101;201;301) of the type comprising a pair of grooves (103) and at least one pair of cutting edges (105',105";205,205";305'305"), **characterized in that** said tip comprises a first edge (105';205';305') and a second edge (105";205";305") and **in that** said first edge (105';205';305') has a first tip angle (ϕ1) and said second edge (105'';205'';305'') has a second tip angle (ϕ2) different from said first tip angle.

2. Drilling tool tip (101;201;301) according to claim 1, wherein said second tip angle (ϕ2) is less than said first tip angle (ϕ1).

3. Drilling tool tip (101;201;301) according to claim 2, wherein said second tip angle (ϕ2) is less than said first tip angle (ϕ1) by about 2°.

4. Drilling tool tip (101;201;301) according to claim 1, wherein said first edge (105';205';305') has a first rake angle and said second edge (105'';205'';305'') has a second rake angle that is different from said first tip angle.

5. Drilling tool tip (101;201;301) according to claim 1, wherein said second rake angle is less than said first rake angle.

6. Drilling tool tip (101;201;301) according to any one of the claims 1 - 5, wherein said first edge (105'), tilted by said first tip angle, is extended from the periphery of said tip and stops before reaching the center of said tip, and wherein said second edge (105''), tilted by said second tip angle, is extended from the periphery of said tip up to the center of said tip.

7. Drilling tool tip (1;101;201;301) according to any one of the claims 1 - 6, wherein said drilling tool tip is a helical tip.

8. Drilling tool tip (1;101;201;301) according to any one of the claims 1 - 6, wherein said drilling tool tip is a straight tip.
